# EUROPÄISCHE PATENTSCHRIFT

(11) **EP 1 528 881 B1**
(45) Veröffentlichungstag und Bekanntmachung des Hinweises auf die Patenterteilung: **03.05.2006**
(21) Anmeldenummer: 03790879.5
(22) Anmeldetag: 07.08.2003
(51) Int. Cl.: A47J 19/00, B26D 3/26

(54) **VORRICHTUNG UND VERFAHREN ZUM ZERSCHNEIDEN UND PRESSEN VON FRÜCHTEN**
DEVICE AND METHOD FOR SLICING AND PRESSING FRUIT
DISPOSITIF ET PROCEDE POUR TRANCHER ET PRESSER DES FRUITS

(30) Priorität: 08.08.2002 DE 20212304 U
(43) Veröffentlichungstag der Anmeldung: 11.05.2005
(73) Patentinhaber: Siegert, Georg, 82377 Penzberg (DE); Widmayr, Klaus, 82377 Penzberg (DE)
(72) Erfinder: Siegert, Georg, 82377 Penzberg (DE); Widmayr, Klaus, 82377 Penzberg (DE)
(74) Vertreter: Kirschner, Klaus Dieter
(86) Internationale Anmeldenummer: PCT/EP2003/008775
(87) Internationale Veröffentlichungsnummer: WO 2004/019738

(56) Entgegenhaltungen:
- DE-U- 20 108 877
- US-A- 3 664 396
- US-A- 5 363 756
- US-A- 5 421 249

## Beschreibung

Die Erfindung betrifft eine Vorrichtung und ein Verfahren zum Zerschneiden und Pressen von Früchten.

Solche Vorrichtungen sind weitläufig bekannt, wie z.B. auch in US-A-5,421,249. Beispielsweise ist in der DE PS 196848 (28.März 1908!) eine Vorrichtung zum Schneiden und Pressen von Gemüse, Früchten und dergleichen mit auswechselbarem Schneidrost oder Sieb beschrieben, bei welchem ein beweglicher Stempel innerhalb eines Behälters Früchte oder Gemüse auf einen Schneidrost oder Sieb drückt. Jedoch endet der Stempel an dem Schneidrost oder Sieb. Damit kann nur entweder geschnitten oder gepresst werden, je nach dem, ob ein Schneidrost oder Sieb eingesetzt wird. Dies ist beispielsweise ungünstig für die Herstellung des Getränkes Caipirinha, bei welchem Limetten zerschnitten werden müssen und in einem Trinkgefäß gepresst werden. Mit der bekannten Vorrichtung ist es unmöglich, in- einem Arbeitsgang diese beiden Vorgänge auszuführen.

Aufgabe der Erfindung ist es, insbesondere das Getränk Caipirinha in einem Arbeitsgang zuzubereiten.

Diese Aufgabe wird dadurch gelöst, daß die Vorrichtung zum Zerschneiden und Pressen von Früchten mit einem beweglichen Stempel und einem Schneidrost ausgerüstet ist und ist dadurch gekennzeichnet, daß der Stempel profiliert ist, daß er durch den Schneidrost hindurch fahrbar und in einen unter den Schneidrost gestellten Trinkbecher hineinfahrbar ist.

Vorzugsweise ist der Stempel zur Krafterspamis durch einen Hebel bewegbar. Durch die Hebelkraft kann der große Kraftaufwand zum Zerschneiden von Limetten mühelos bewältigt werden. Ebenfalls vorzugsweise ist der Stempel durch einen Motor bzw. pneumatisch bewegbar.

In der Praxis werden bei der Zubereitung des Getränkes Caipirinha die Limetten mit einem Messer von Hand zerschnitten und mit einem Stempel von Hand gepresst, und zwar in dem Trinkbecher. Bei der massenhaften Herstellung des Getränkes Caipirinia, beispielsweise bei einer Festlichkeit, erfordert dies einen großen Personal- und Kraftaufwand. Durch die erfindungsgemäße Presse, welche im einfachsten Fall durch eine umgebaute Bohrständer verwirklichbar ist, kann dieser Personal- und Kraftaufwand gesenkt werden. Eine besonders bevorzugte Ausführungsform der Erfindung ist durch die Figuren erläutert, in welchen

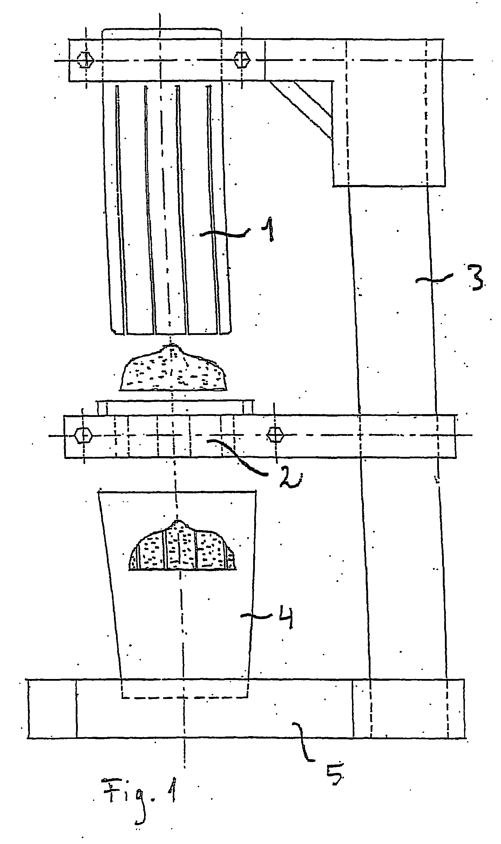

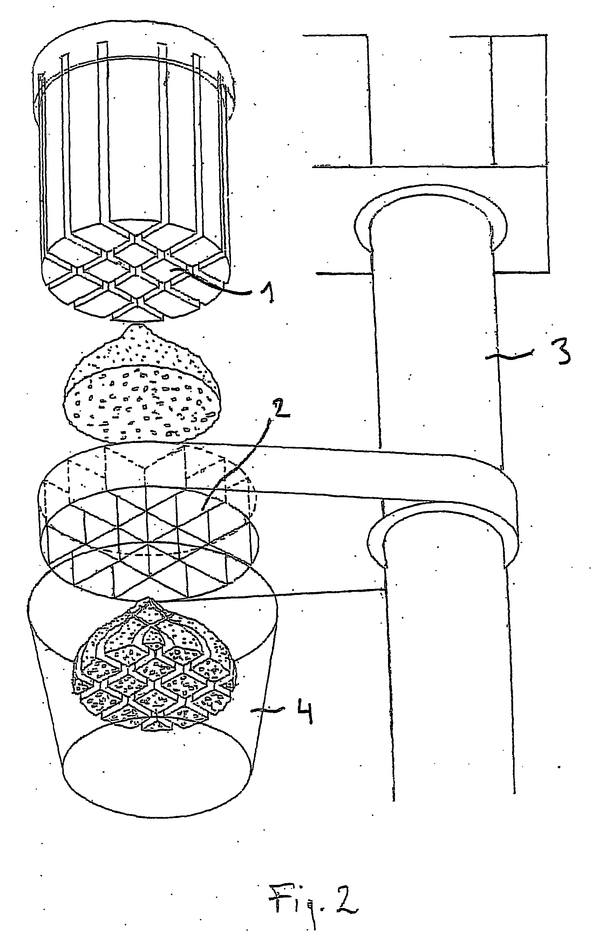

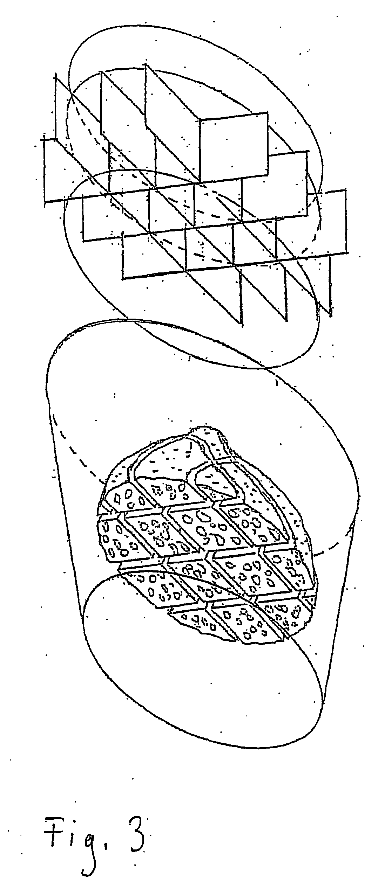

Figur 1 zeigt einen Längsschnitt der erfindungsgemäßen Vorrichtung und die Figuren 2 und 3 stellen perspektivische Ansichten dar.

In Figur 1 ist der Stempel 1 vertikal gleitbar auf einer Stange 3 angebracht. Der Schneidrost 2 ist an dieser Stange feststehend angeordnet. Der Stempel 1 ist derart profiliert, daß er durch den Schneidrost 2 hindurch bewegbar ist. Zwischen dem Stempel und dem Schneidrost wird die Limette gelegt, welche nach Durchstoßen durch den Schneidrost hindurch mittels des Stempels zerschnitten in das Trinkgefäß 4 gelangt. Das Trinkgefäß 4 steht auf einer Konsole 5.

In der Figur 2 ist das gleiche Prinzip perspektivisch gezeigt, wobei zu erkennen ist, daß der Stempel 1 und das Schneidrost 2 gitterartig ausgebildet sind. Die Limette wird dadurch würfelförmig zerschnitten. Die Figur 3 zeigt das gleiche Prinzip aus anderer Ansicht.

Mittels des Stempels können die in das Trinkgefäß durch den Schneidrost hindurch gestoßenen Limettenstücke sodann durch den Stempel 2 im Trinkgefäß zusammengequetscht werden, wobei die Limettenstücke mind. unter teilweiser Freisetzung des Limettensaftes zerquetscht werden.

## Patentansprüche

1. Vorrichtung zum Zerschneiden von Früchten mit einem beweglichen Stempel (1) und einem Schneidrost (2), wobei der Stempel so profiliert ist, daß er durch den Schneidrost hindurch in einen unter den Schneidrost (2) angeordneten Trinkbecher (4) und aus diesem heraus zurück bewegbar ist, eine Frucht in großen Stücken z. B. hälftig zerteilt und derart auf dem Schneidrost angeordnet wird, daß die auf dem Schneidrost liegende zerteilte Frucht mittels des Stempels durch den Schneidrost hindurch gedrückt wird, und die mittels des Schneidrosts zerschnittenen Fruchtteile in den Trinkbecher durchgestoßen und diesem vom Stempel unter Saftfreigabe zerquetscht werden, **dadurch gekennzeichnet, daß** eine mit dem Schneidrost (2) fest verbundene Konsole (5) vorgesehen ist, auf welcher der Trinkbecher (4) steht.

2. Vorrichtung nach Anspruch 1, **dadurch gekennzeichnet, daß** der Stempel (1) durch einen Hebel bewegbar ist.

3. Vorrichtung nach Anspruch 1, **dadurch gekennzeichnet, daß** der Stempel (1) durch einen Motor bewegbar ist.

## Claims

1. Device for slicing fruits having a movable plunger (1) and a cutting grid (2), wherein the plunger is provided with a profile such that it is movable through the cutting grid into a drinking cup (4) located beneath the cutting grid (2), and out of this (cup) in return, that it slices a fruit into large pieces, for example into halves, and is arranged on the cutting grid such that the sliced fruit located on the cutting grid is pressed by means of the plunger through the cutting grid and the fruit pieces sliced by means of the cutting grid are pushed into the drinking cup and are squeezed by the plunger while releasing juice, **characterized in that** a console (5) is provided which is fixedly connected to the cutting grid (2) on which console the drinking cup (4) is resting.

2. Device according to claim 1, **characterized in that** the plunger (1) is movable by means of a lever.

3. Device according to claim 1, **characterized in that** the plunger (1) is movable by means of a motor.

## Revendications

1. Dispositif pour trancher des fruits, avec un poinçon mobile (1) et une grille à trancher (2), où le poinçon est tellement profilé que, celui puisse être introduit par la grille à trancher dans un verre (4) disposé sous la grille à trancher (2) et de celui qu'il puisse être retiré, un fruit est tranché en grands morceaux, par exemple tranché en moitiés, et de telle manière sera disposé sur la grille à trancher, de sorte que le fruit tranché situé sur la grille à trancher soit pressé par l'intermédiaire du poinçon par la grille à trancher, et par l'intermédiaire de la grille à trancher les morceaux de fruit tranchés sont poussés dans le verre et pressés dans celui par le poinçon pour éliminer le sucre, **caractérisé en ce qu'**on pourvoit une console (5) assemblée étroitement avec la grille à trancher (2), sur laquelle est assis le verre (4).

2. Dispositif selon la revendication 1, **caractérisé en ce que**, le poinçon (1) est déplaçable à l'aide d'un levier.

3. Dispositif selon la revendication 1, **caractérisé en ce que**, le poinçon (1) est déplaçable à l'aide d'un moteur.
